# EUROPEAN PATENT APPLICATION

(11) **EP 2 214 230 A1**
(43) Date of publication of application: **04.08.2010**
(21) Application number: 10001362.2
(22) Date of filing: 11.09.2003
(51) Int. Cl.: H01M 4/485, H01M 4/02, H01M 4/62, H01M 10/052

(54) **Novel electrodes for Li-based electrochemical energy storage devices and Li-based electrochemical storage device including such an electrode**

(30) Priority: 13.09.2002 DE 10242694
(62) Divisional of application: 03788901.1
(71) Applicant: Max-Planck-Gesellschaft zur Förderung der Wissenschaften e.V., 80539 München (DE)
(72) Inventor: Balaya, Palani, Singapore 128035 (SG); Li, Hong, 100080 Beijing (CN); Maier, Joachim, 75446 Wiernsheim (DE)
(74) Representative: Manitz, Finsterwald & Partner GbR

(57) **Abstract**

The description relates to the use of at least one molybdenum oxide and ruthenium oxide with a binder, e.g. at least one of PVDF, PTFE, PAN and ETDM and optionally with at least one conductive additive such as carbon black, graphite, metal powder and metal fibres as an electrode in an Li-based electrochemical energy storage device. Further electrode materials are also described based on a nano-composite composed of ruthenium or molybdenum and lithium oxide clusters.

## Description

The present invention relates to novel electrode materials for Li-based electrochemical energy storage devices and to a Li-based electrochemical storage device.

Lithium batteries are known in non-rechargeable and in rechargeable form. Such batteries comprise positive and negative electrodes with a non-aqueous electrolyte disposed between them. In a rechargeable lithium ion battery (secondary battery) the positive electrode of the battery can for example be LiCoO₂ (referred to as the "cathode" in Li-battery community) and the negative electrode can for example be carbon (referred to as the "anode" in Li-battery community). In a non-rechargeable battery (primary battery) the positive electrode can for example be MnO₂ and the negative electrode can be lithium metal.

In the state of the art, lithium-ion batteries and RuO₂ proton-type supercapacitors are used for rechargeable electrochemical storage devices. Among current commercial Li-ion batteries, when carbon is used as an anode material, the Li-storage capacity is less than 372 mAh/g. When Li-CoO₂ is used as the cathode material it has a capacity less than 150 mAh/ g. For RuO₂ proton-type supercapacitors, the highest capacitance is reported as 1200 F/g, less than 200 mAh/ g.

Various different types of electrolyte are known. For example there is the class of liquid electrolytes comprising at least one ionically conducting salt such as Li(TFSI), i.e. lithium bis(trifluorosulphonyl)imide, LiPF₆, i.e. lithium hexafluorophosphate or LiClO₄, i.e. lithium perchlorate which are present, with a low degree of association, within a non-aqueous solvent such as a mixture of DME (dimethylethane) and EC (ethylene carbonate), a mixture of DEC (diethylene carbonate) and EC, or a mixture of DMC (dimethyl carbonate) and EC or PC (propylene carbonate) or combinations thereof.

In addition there are so-called dry polymer electrolytes. In these electrolytes the salt is selected as before (i.e. for example from Li(TFSI), LiPF₆ or LiClO₄) and is dispersed in a polymer or mixture of polymers. Suitable polymers comprise PEO (polyethylene oxide), PVDF (polyvinylene difluoride), PAN (polyacrylonitrile), and PMMA (polymethyl methyl acrylate).

Furthermore, there are so called polymer gel electrolytes. These have the same basic composition as the dry polymer electrolytes recited above but include a solvent, for example a solvent of the kind recited in connection with the liquid electrolytes given above.

The known liquid electrolytes described have the advantage that they have a high ionic conductivity up to a transference number of 0.6 and a high conductivity of 10⁻² S/cm. In addition the liquid properties ensure good wetting of the electrode surface. They are however dangerous because leakage can occur, so that safety considerations arise. In addition they can lead to passivation effects which are undesirable.

The dry polymer electrolytes do not result in good wetting of the electrodes, the conductivities which can be achieved are quite low and there is also not much scope for modifying the chemical composition of the ingredients. However, the electrolytes are good safety-wise and no leakage occurs.

With the polymer gel electrolytes the change in liquid content results in reductions in the conductivity and there is also the danger of leakage.

An improved electrolyte is described in European patent application 03018161.4 filed on August 8th 2003 and assigned to the present applicants, the content of this application is hereby incorporated into the present application by reference. In accordance with the above referenced European application there is provided:
a non-aqueous electrolyte including
   - at least one ionically conducting salt, especially a lithium salt,
   - a non-aqueous, anhydrous solvent for the ionically conductive salt, said solvent being selected to achieve a degree of dissociation of the ionically conductive salt in the non-aqueous solvent,
   - at least one oxide in a particulate form, said oxide being selected such that it is not soluble in said solvent and such that it is water-free.

It has namely been found that the addition of fine oxide particles, e.g. in powder or elongate particle form, leads to a substantial increase in conductivity but with no disadvantages.

The electrolyte preferably has a low degree of dissociation, preferably with an association constant in the range from 1 x 10⁻¹ to 10⁸ /l⁻¹.mol⁻¹.

When used in a primary or secondary lithium battery having positive and negative electrodes, the oxide should be selected such that it does not react with the material of either of said positive and negative electrodes. The non-aqueous electrolyte described in the above referenced European application is not restricted to use in a battery, it can for example be used in a supercapacitor, in electrochromic devices such as electro-chromic displays or in a solar energy cell.

In the non-aqueous electrolyte described in the European application the ionically conductive salt is selected from the group comprising Li(TFSI), LiPF₆ and LiClO₄.

Moreover, the non-aqueous, anhydrous solvent is preferably selected from the group comprising DEC/EC, DMC/EC, PC, carbonate based solvents related to any of the foregoing, DMSO, organic sulphur compounds, THF, AN and mixtures of any of the foregoing.

The oxide used is preferably selected from the group comprising oxides exhibiting acidic properties, for example SiO₂, TiO₂ and oxides exhibiting basic properties, for example Al₂O₃, MgO and any mixtures thereof.

The average particle size of the oxide for particles of approximately spherical shape, is selected to be less than 5 µm and preferably less than 2 µm, with no lower limit other than that set by manufacturing techniques used to produce said oxide. For elongate particles, such as nano-wires or nano-tubes, the average diameter is selected to be less than 1 µm, preferably less than 100 nm, there being no limit on the length of such elongate particles.

The amount of oxide present in the electrolyte is preferably such as to give the electrolyte a consistency between that of a liquid and a solid, preferably a consistency similar to that of a soggy sand, i.e. a liquid and sand mixture having a consistency such that sedimentation effects do not occur.

The above electrolytes can all be used with the electrodes and in the electrochemical storage device of the present invention.

Due to the rapid development of the electronic industries, there is a great demand to increase further the energy density of electrochemical energy storage devices, leading to great interest in novel electrode materials.

Accordingly, the object of the present invention is to provide novel materials which permit a significant improvement in the electrochemical performance of Li-based electrochemical energy storage devices and electrodes for such Li-based electrochemical energy storage devices.

In order to satisfy this object, there are provided, in accordance with the invention, the electrodes of claims 1, 4 and 5 and 6 and the Li-based electrochemical storage device of claims 7 and 8.

The applicants have namely found that the transition metal halides, in particular the fluorides, and also ruthenium and molybdenum oxides can be used for Li-based electrochemical energy storage devices over a wide voltage range, for example from 0 to 4.3 V, and that they show large Li-storage capacities and good cyclic performance.

Furthermore, it has also been found that amorphous composites consisting of metal clusters of a transition metal and Li₂O or LiF dispersed at an atomic scale or at a nanometer scale also show high reversible Li-storage behaviour.

### More specifically, the following advantages can be achieved:

When the transition metal fluorides (the metal comprising one or more of the transition metals Ti, V, Cr, Ni, Mn, Fe, Co, Cu) is used as an active electrode material in an Li-based electrochemical energy storage device, high reversible capacities >500 mAh/g and sufficient cyclic performance over a wide voltage range, typically from 0-4.3V are achieved. Some transition metal fluorides show high voltage as high as 3.5 V, such as CoF₃ and CuF₂.

Furthermore, it has been found that ruthenium and molybdenum oxides can be used as electrode materials for Li-based electrochemical energy storage devices and that these exhibit very high capacities, for example 1200 mAh/g, high Coulombic efficiency (typically about 100%), good reversibility over a wide voltage range (typically 0-4.3V) and high electronic conductivity.

Furthermore, amorphous composites of metal clusters of one or more of the transition metals and Li₂O or LiF at an atomic scale or a nanometer scale also show a high reversible Li-storage behaviour due to the interfacial charging which takes place.

The invention will now be described in more detail with reference to specific embodiments and measurements with reference to the accompanying drawings.

In the drawings there are shown:
- Fig. 1: a schematic illustration of a commercial Li-ion battery,
- Figs. 2A-F: discharge and charge curves of fluorides/Li-cells (with lₒ = 0.2 mA/cm² if not mentioned),
- Fig. 3: Ex situ micro-Raman spectra of TiF3B electrodes. λ = 632.8 nm, 20x lens,
- Figs. 4A-B: Ex situ micro-Raman spectra (Fig. 4A) and XRD patterns (Fig. 4B) of VF₃ electrodes at different Li-insertion states,
- Figs. 5A-E: HRTEM images of TiF₃ electrode at different states, namely

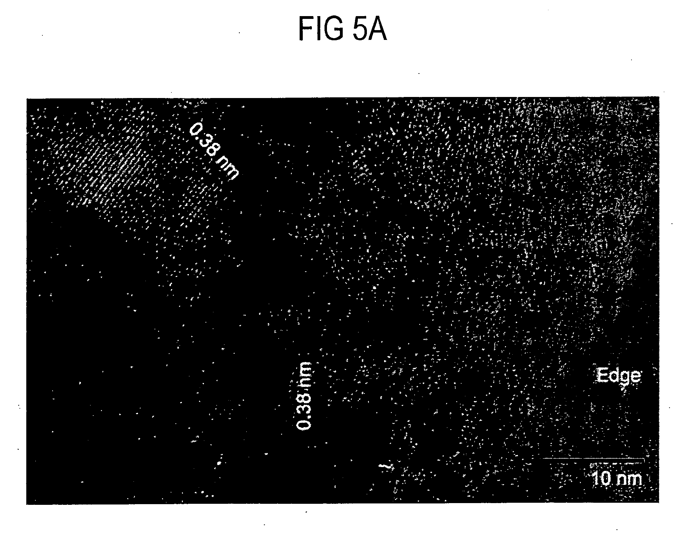

- Fig. 5A: original;

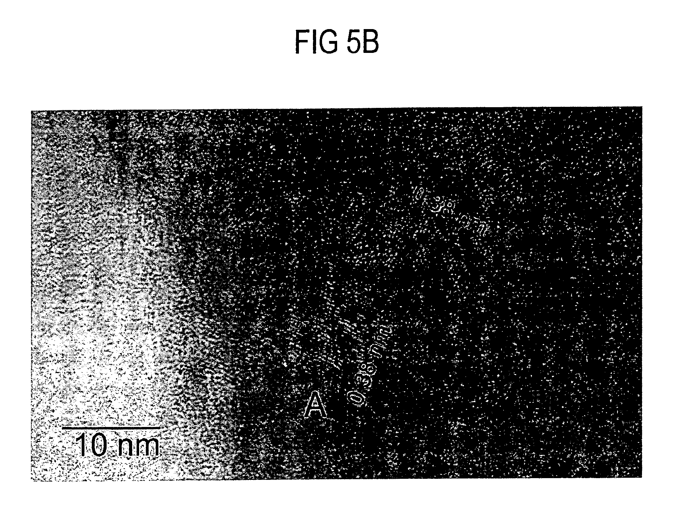

- Fig. 5B: discharged to 0.4 V

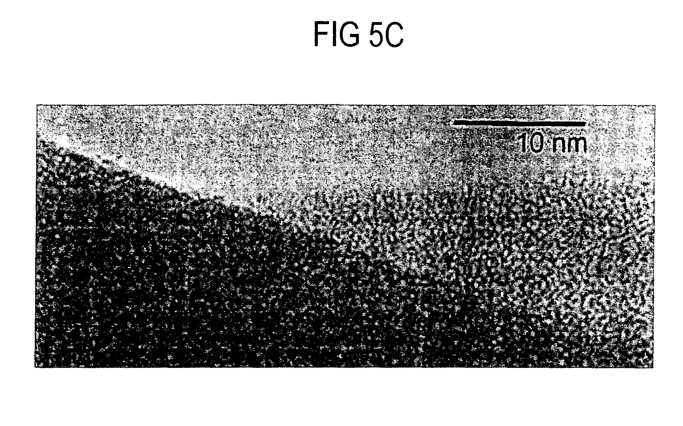

- Fig. 5C: discharged to 0.0 V

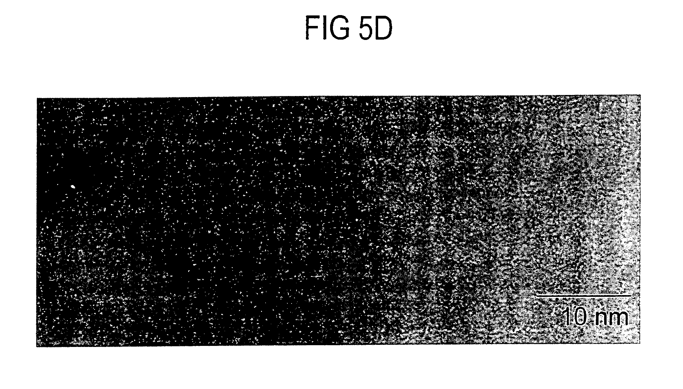

- Fig. 5D: charged to 3.0 V

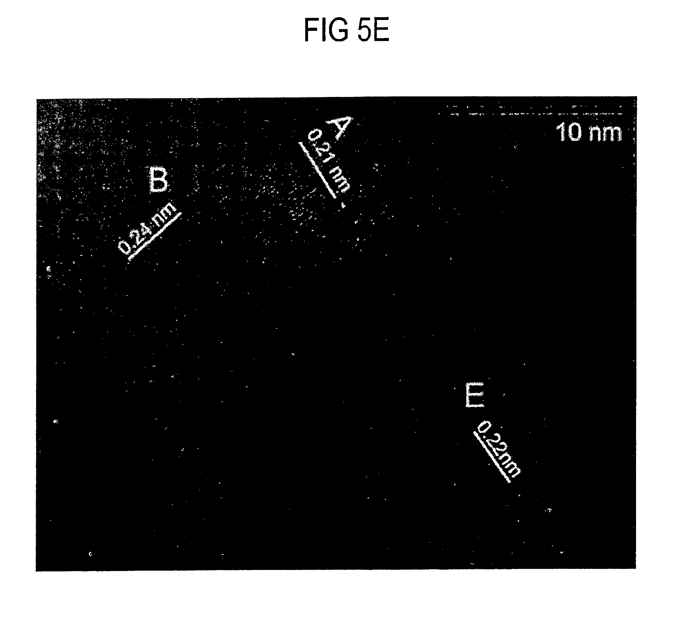

- Fig. 5E: charged to 4.3 V

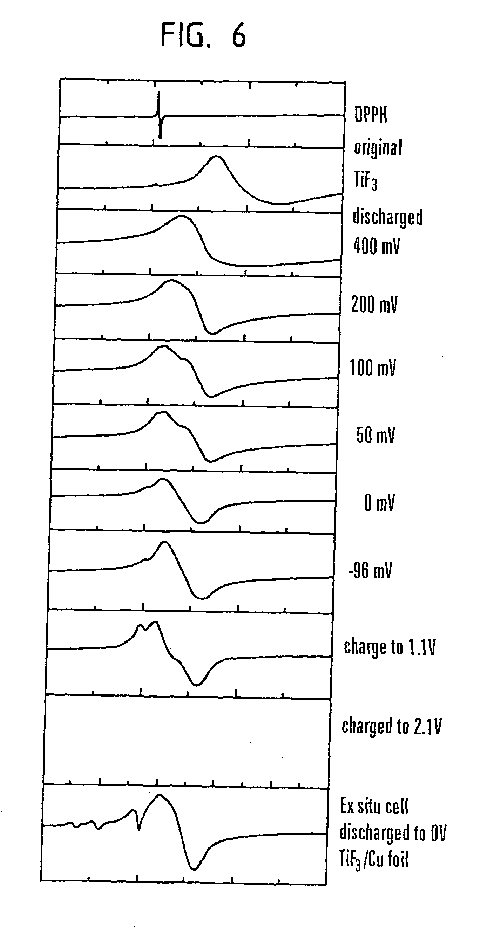

- Fig. 6: An ESR plot showing ESR spectra of TiF₃A electrode at differ- ent Li-inserted states which suggests that with insertion of Li ion, the chemical state of Li in a product of the reaction (II) is approaching to metal Li, and

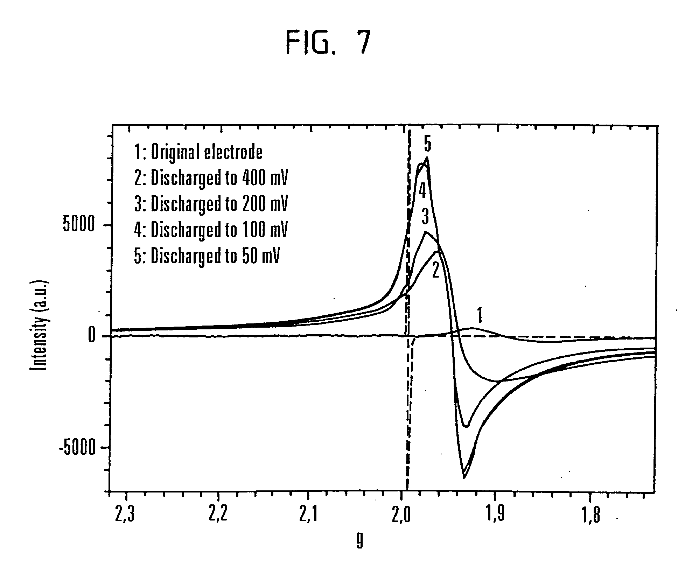

- Fig. 7: the ESR plots of Fig.6 in overlapped form to show intensity variation, with T = 100K, Q= 3100, Attenuation: 25, P: 0.638 mW.

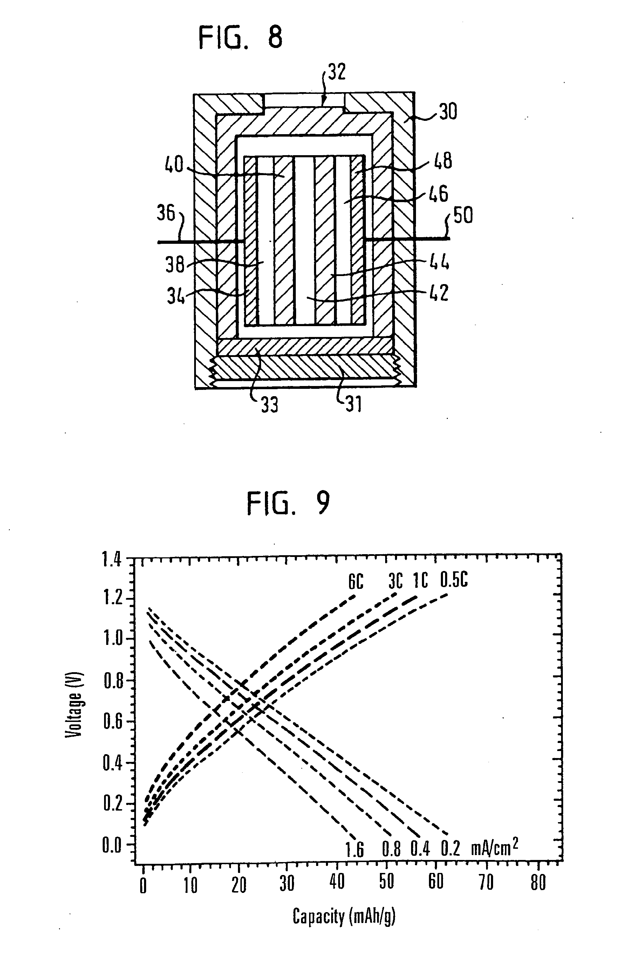

- Fig. 8: a schematic illustration of an experimental cell,
- Fig. 9: a diagram illustrating the rate performance of a TiF₃/Li cell in a low voltage range,

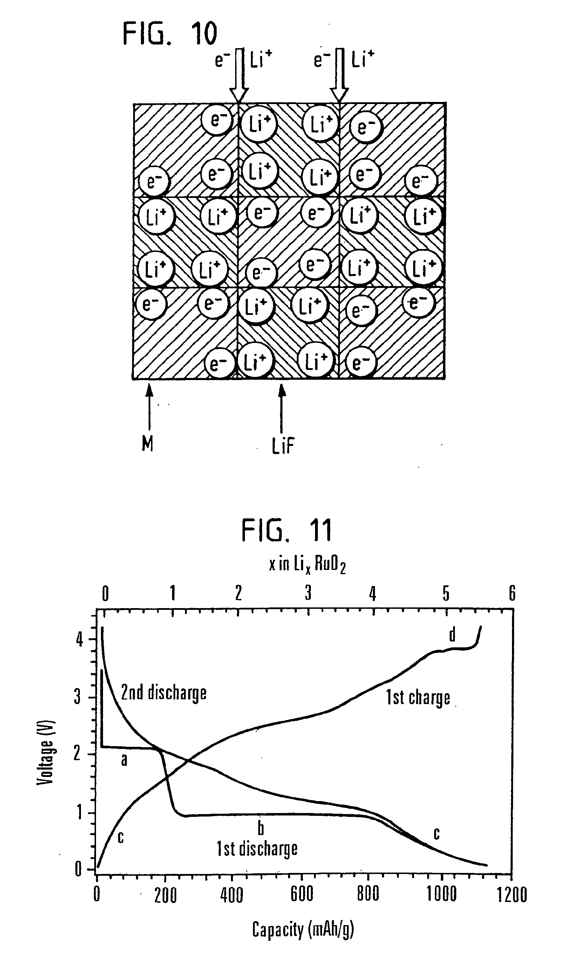

- Fig. 10: a diagram showing the interfacial charging mechanism for Li- storage at grain boundaries between M and LiF nano-grains or nano-clusters and
- Fig. 11: a discharging and charging curve for a RuO₂/Li cell in accor- dance with the invention.

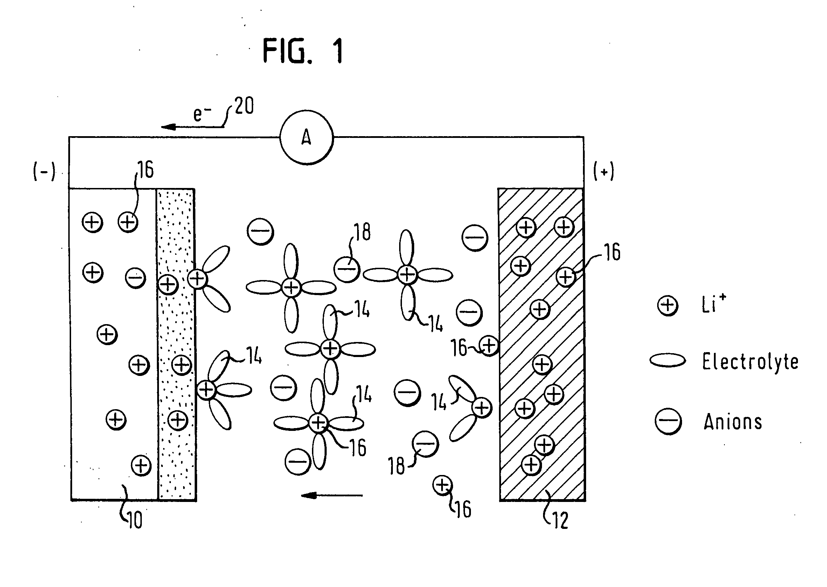

Referring first of all to Fig. 1 there is shown a diagram illustrating the basic configuration of a button type Li-ion battery of the commercially available kind typically comprises an anode (in this case a carbon anode) 10, a cathode 12, in this case LiCoO₂ and an electrolyte 14 disposed in the space between the anode 10 and the cathode 12.

Present throughout the volume of the electrolyte are also lithium ions 16 shown as circles with a cross in the middle, and anions 18 shown as larger circles with a single line through the middle. When an external circuit is connected to the battery, current flows in the direction opposite to the arrow 20 during discharging and in the direction of the arrow during charging.

It has already been established by others that transition metal oxides, more specifically the oxides Fe, Ni, Co, Cu, show promising performance as anode materials for rechargeable lithium batteries. The reversible Li-storage mechanism is due to the formation and decomposition of Li₂O upon the electrochemical insertion/extraction of Li (see references 1 and 2). The key point for the reversibility is related to be the formation of a special microstructure in which metal clusters are dispersed uniformly with Li₂O at a nanoscale after electrochemical reaction of metal oxide with Li (again reference is made to the references 1 and 2).

The present applicants had the idea that LiF, which is electrochemically inactive, might be able to show electrochemical activity when it is dispersed with a transition metal at an atomic or nanoscale level. A series of transition metal fluorides ( M = Ti, V, Mn, Fe, Co, Ni, Cu) have been investigated and the present description shows the results on TiF₃ and VF₃ as examples. SnF₂ and (CFx)n, where x=1 and n is an integer are also presented for comparison purposes.

### The experimental setup was as follows:

An experimental cell in accordance with Fig. 8 was used. In this cell the reference numeral 30 represents a copper cylinder with a base 31 which can be screwed into the cylinder to apply pressure to the contents. Reference numeral 32 refers to a Teflon cylinder disposed within the copper cylinder and provided with an end plate 33. Reference numeral 34 is a stainless plate connected to a lead 36, 38 is a stainless steel plate acting as a current collector, 40 is an anode electrode, 42 is a separator (e.g. Cel-grad 2300) rinsed with a non-aqueous electrolyte, 44 is a cathode electrode, 46 is a stainless steel plate acting as a current collector and 48 is a further stainless steel plate connected to a lead 50.

The working electrodes 40 and 44 comprised either **TiF3A**: TiF₃: PVDF (9:1 by weight) on Ti foil or **TiF3B**: TiF₃: CB: GP: PVDF (10:0.5:0.5:1 1 by weight) on Ti foil. Throughout this specification and drawings CB denotes carbon black, GP denotes graphite and PVDF denotes polyvinylene difluoride. the pasting procedures for the electrode film are similar to those reported in H. Li, L. H. Shi, W. Lu, X. J. Huang, L. Q. Chen, J. Electrochem. Soc., 148, A915(2001). It is noted that TiF₃ is a commercially available powder with a powder size generally in the range from 300nm to 5µm. This size is however not critical. CB is usually available with a particle size up to 40nm and GP with a particle size in the range from 1 to 10 µm. Again these particle sizes are not critical.

Thus the electrochemical cells tested were 2-electrode cells for electrochemical testing as illustrated in Fig.8 and similar in layout to the known cell of Fig. 1 but using the alternative electrodes. It is noted that the electrode materials proposed and claimed here can be used as either anodes or cathodes depending on the relative potential difference to the metal lithium. If this potential difference is 2.5 volts or less then the material is considered suitable as an anode material. If the potential difference is 2.5 volts or more then the material is considered suitable as a cathode material.

The electrolyte was:
1M LiPF₆, EC-DMC(1:1), Merck , i.e. 1 molar lithium phosphorous fluoride 6, ethylene carbonate-dimethyl carbonate available from Merck, and the investigation was carried out using HRTEM and micro-Raman with procedures similar to those described in the papers by H. Li, X. J. Huang, L. Q. Chen, Electrochem. Soild-State Lett., 1,241(1998) and H. Li, Y. Mo, N. Pei, X. Xu, X. J. Huang, and L. Q. Chen, J. Phys. Chem. B 104, 8477(2000).

The special electrochemical cell described with reference to Fig. 8 was designed for the control of the Li-insertion state and for a subsequent pseudo in-situ ESR experiment. The interference from the electrolyte and Li electrode can be avoided. The TiF3A type electrode was used for ESR and HRTEM and the TiF3B type electrode was used for micro-Raman.

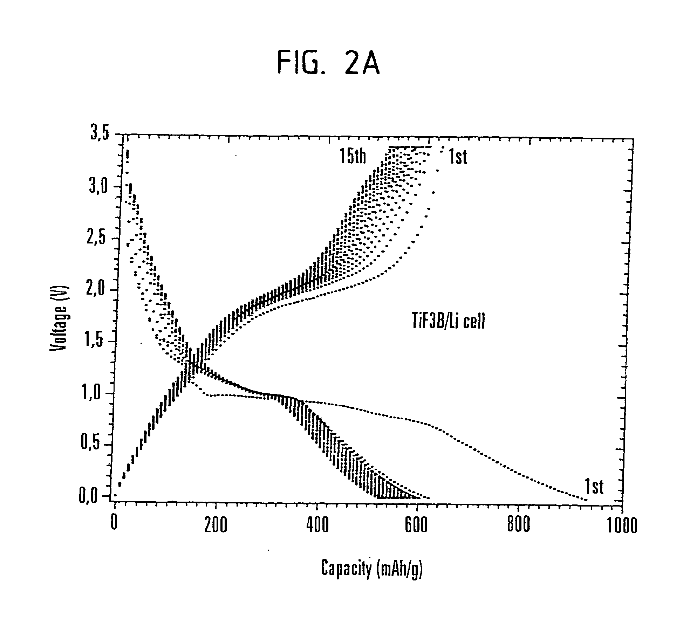

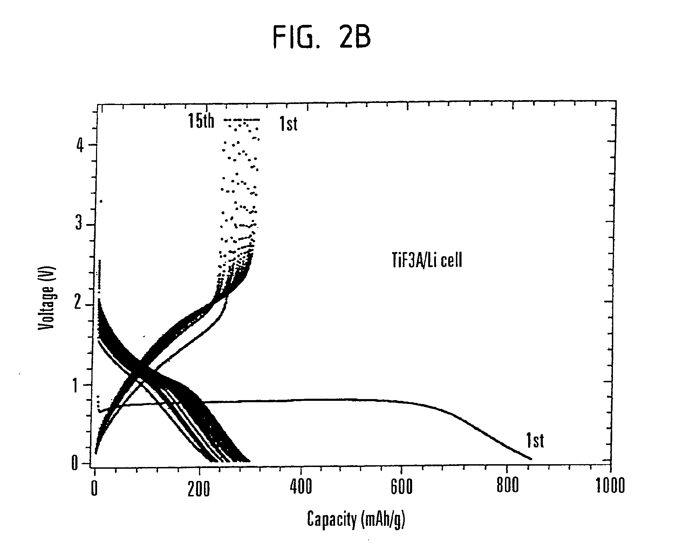

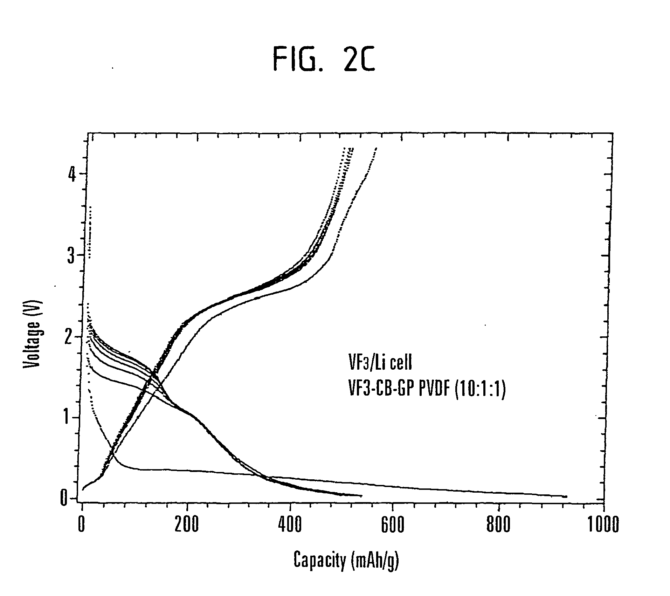

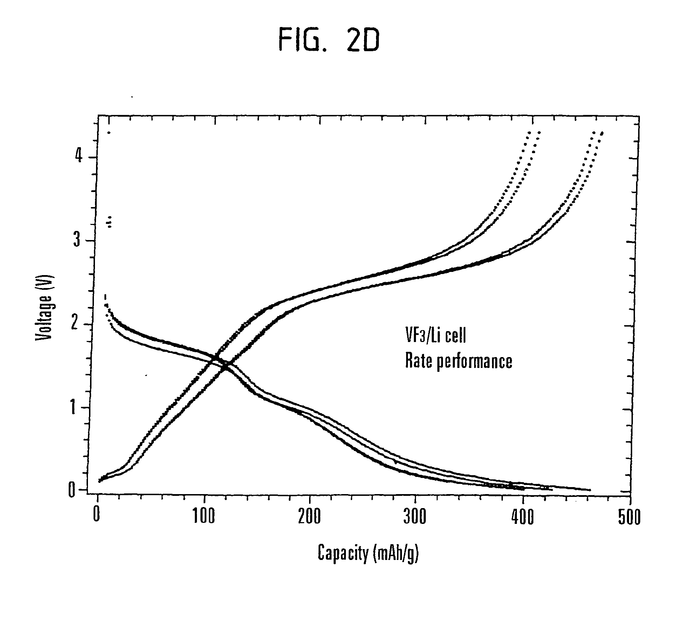

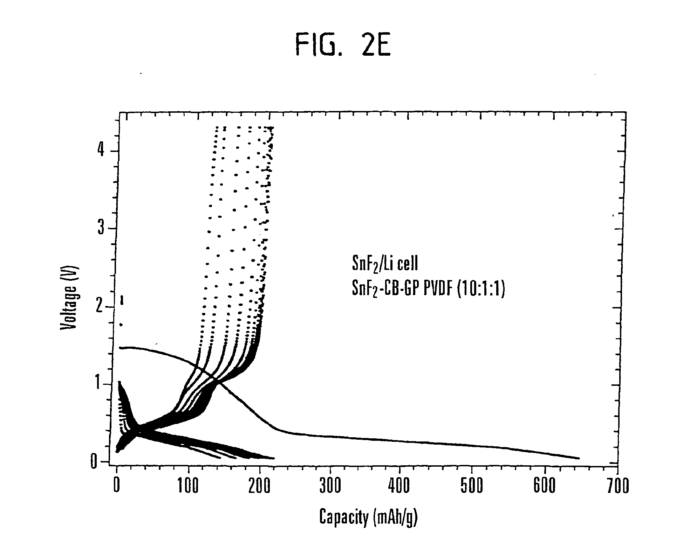

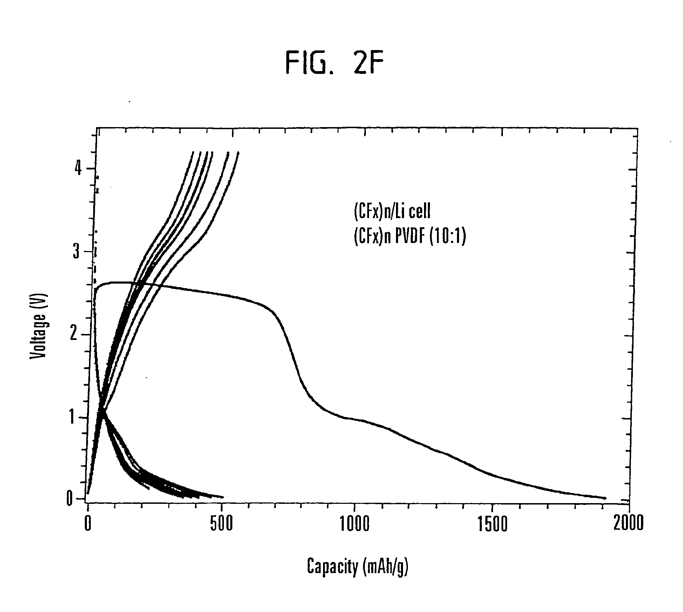

Various examples of electrodes will now be described with reference amongst other things to Figs. 2A to 2F which show the discharge and charge curves that were achieved for Li cells utilising TiF₃ electrodes (Figs. 2A and 2B) and VF₃ electrodes (Figs. 2C and 2D) and also for SnF₂ electrodes (Fig. 2E ) and (CFx)n electrodes (Fig. 2F).

### Example 1

Fig. 2A shows a voltage capacity diagram of a first example of a Li-cell using TiF3B as the cathode and metal lithium as the anode together with the specific electrolyte described above. The diagram shows a typical series of charging and discharging cycles for a Li-cell. It can be seen that, as is usual for an Li-cell the discharging capacity reduces from a value of almost 1000 mAh/g at the first cycle to a steady state value of over 500 mAh/g. Similarly, the charge capacities achieve a steady value of over 500 mAh/g. The electrode composition of the TiF₃ material of the electrode changes into a mixture of LiF and Ti during this discharging and transforms back to TiF₃ during charging process. It is this which results in the reversible capacity.

### Example 2

Fig. 2B shows an example similar to that of example 1 but using TiF3A as the anode material. The family of curves is generally similar to that of Fig. 2A but the reversible capacity achieved reduces to a value of 220 mAh/g. Although this is still a good value it is not as good as that of example 1 where the electrode material contains the conductive additives of carbon black and graphite.

### Example 3

Fig. 2C shows an example in which the electrode material of the anode is a mixture of VF₃ : CB : GP :PVDF in the ratio 10 : 1 : 1: 1 with components VF₃, CB and GP being in the form of powders (particle size of VF₃ is 200 nm, CB is typically up to 40 nm and GP has a particle size of 1 to 10µm-again these sizes are not critical). The powders are mixed with PVDF to form a fine paste deposited on a Ti foil. Again the family of curves for the charge and discharge cycles shows that after the battery has settled down a reversible capacity of about 540 mAh/g can be achieved.

### Example 4

Fig. 2D shows an example similar to Fig. 2C but at different discharging and charging rate. The family of curves shows that a useful reversible capacity of 450 mAh/g can be achieved at current density of 0.5 C and 400 mAh/g at 1C. This example shows that the electrode materials of fluorides can also show good rate performance.

### Comparative Example 5

Fig. 2E shows the family of curves achievable for an anode material comprising SnF₂ : CB : GP : PVDF in the ratio 10 : 1 :1: 1. Here SnF₂, CB and GP are mixed with PVDF as a binder and deposited on a Ti foil. The family of curves shows a reversible capacity of 140 mAh/g which is well below the levels achieved in the previous examples.

### Comparative example 6

Fig. 2F shows the family of curves achievable for an anode material comprising a mixture of (CFₓ)ₙ and PVDF where x is 1 and n means a polymer. The mixture is made in the ratio 10 : 1 and deposited on a Ti foil. The reversible capacity after a plurality of charging and discharging cycles has reduced to about 200 mAh/g.

The voltage profile of the discharge curves exhibits plateau region at high voltage and slope region at low voltage. The capacity of the plateau region is close to the theoretical capacity of decomposition reaction of fluorides, which is reversible in the cases of TiF₃ and VF₃. The slope regions for SnF₂, TiF₃ and VF₃ are also reversible, but the former is caused by the Li-Sn alloy reaction (see reference 5), while later (about 250 mAh/g) is related to the insertion of Li into the matrix of LiF/M. Interestingly, (CFx)n also shows partial reversibility. The theoretical capacity and voltage for the decomposition reactions (Plateau region) are as follows:
TiF₃: 767 mAh/g, 1.396 V; VF₃: 745 mAh/g, 1.863 V;
SnF₂: 342 mAh/g, 2.984V; (CFx)n, x=1865 mAh/g, 2.9V.

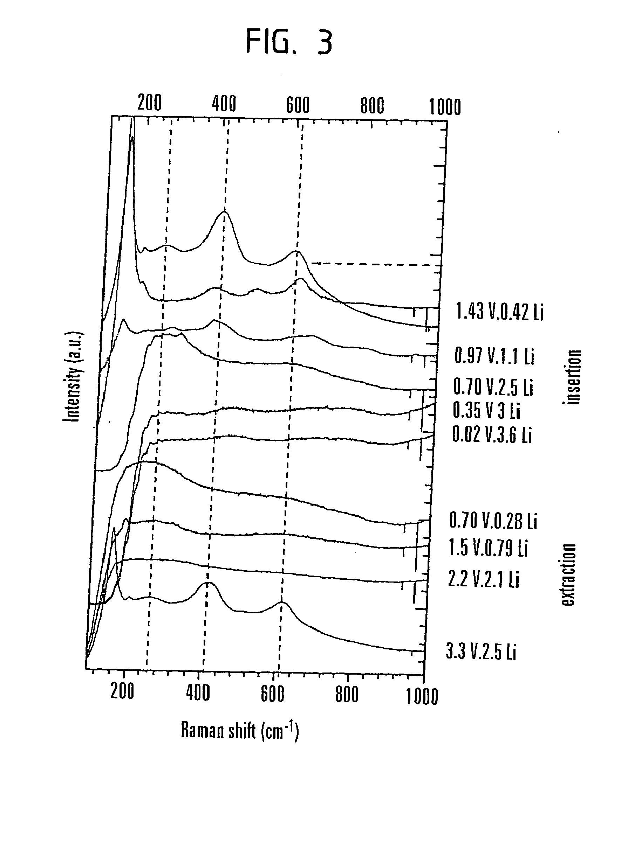

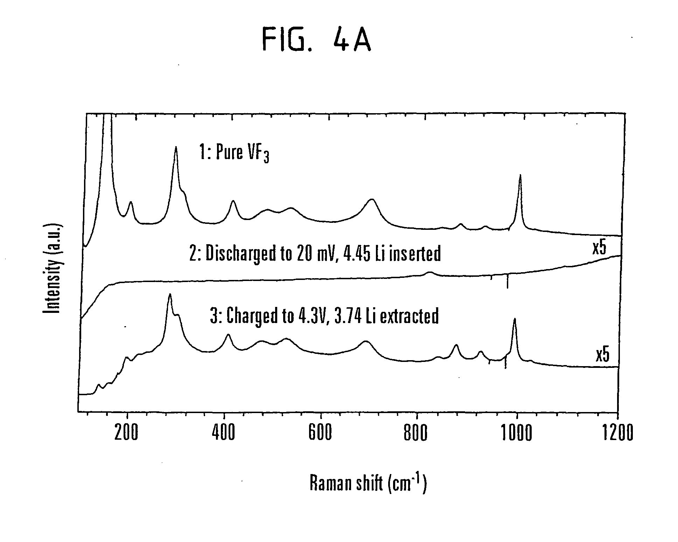

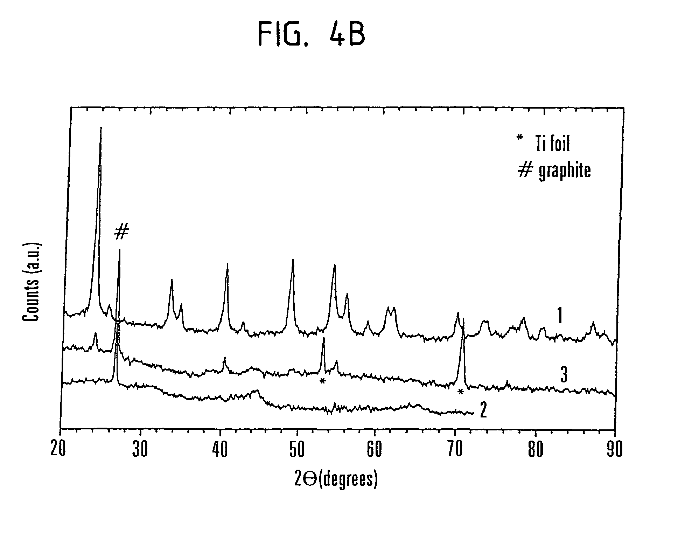

The results of Raman spectroscopy and XRD investigations are shown in Figs. 3 and 4.

In Fig. 3 phase transitions are observed from the crystal to the amorphous state with Li insertion and back to the original phase with Li extraction.

Fig. 4 shows ex situ Raman spectra (Fig. 4A) and and XRD patterns (Fig. 4B) of VF₃ electrodes at different Li insertion states.

Turning now to Fig. 5 there are shown HRTEM images of TiF₃ electrodes at different states. The five states, Fig. 5A to Fig. 5E are as follows:
5A: Original; 5B: discharged to 0.4 V; 5C: discharged to 0.0 V;
5D: charged to 3.0 V; and 5E: charged to 4.3 V.

The crystal parameters are as follows:
TiF₃: Rhombohedral, d₁₁₀: 0. 388 nm, d₁₀₁: 0.274 nm, d₂₁₀: 0.233nm, d₂₀₀: 0.223nm
Ti: Hexagonal, d₀₁₀: 0. 256 nm, d₀₀₂: 0.234 nm, d₀₁₁: 0.224nm.
Li: Cubic, d₁₁₀: 0.248 nm, d₂₀₀: 0.176 nm.
LiF: Cubic, d₁₁₁: 0.233 nm, d₂₀₀: 0.201 nm;

Figs. 6 and 7 show ESR spectra of the TiF3A electrode at different Li-inserted states (Fig. 6) and the same diagrams overlapped (Fig. 7) to show intensity variation. The following parameters apply here:
T= 100 K, Q=3100, Attenuation: 25, P: 0.638 mW,

The ESR results suggest that with insertion of Li ions, the chemical state of Li in the product of the reaction (II) is approaching to metal Li.

From these results, the following conclusions can be drawn:
1. The following electrochemical reactions occur between transition metal fluorides and Li at a wide voltage range (0-4.3V), besides the formation of the solid electrolyte interphase (SEI) film and intermediate Li transition metal fluorides in the cases of Ti, V, Fe (which form Li_{0.5}MF₃):

| | |
|---|---|
| Discharge/insertion: | MFn + nLi⁺ + ne⁻ → M + nLiF (I) - plateau region, |
| | M/(LiF)n+ Li⁺ + e- → i-(LiF)n-M (II) - slope region |
| Charge/extraction: | Li-LiF-M - Li⁺ - e- → M/(LiF)n (III) |
| | M/ (LiF)n - nLi⁺ -ne- → MFn (IV) |

Here M represents any transition metal.
2. We propose that the extra capacity at the slope region for fluorides is mainly due to the interfacial charging of Li within the matrix of LiF/M, as illustrated in Fig. 10, rather than the formation of the SEI film (see reference 2). Fig. 9 illustrates the rate performance of the interfacial charge of Li in LiF/Ti nanocomposites. In this diagram 6C signifies 10 minutes, 3C signifies 20 minutes, 1C signifies one hour and 0.5C signifies two hours. It can be seen from this diagram that high capacities are achievable even at fast discharge rates. This makes the electrode materials particularly useful for use in a supercapacitor.
3. Microstructure of the products in the reaction (I) and (II) is amorphous, which may indicate an atomic-scale dispersion of metal and LiF. This is a key factor for the extraction of Li from LiF.
4. The reversibility of the reaction (IV) is related to metal type and conductive additive (kinetic problem).

### Example 7

This example relates to an electrode in accordance with claim 4. Here the cathode material comprises molybdenum oxide (MoO₃) in powder form with an average particle size of 200nm mixed with a binder in the form of PVDF and deposited on a Ti foil. The mixture ratio was 10:1. The anode was lithium and the electrolyte as used in example 1 (and in the other examples). The reversible capacity was found to be 500 mAh/g.

### Example 8

This example was basically the same as Example 7 but CB and GP were added so that MoO₃: CB : GP : PVDF was 10 : 1 :1 : 1. Here the reversible capacity was found to be 700 mAh/g.

### Examples 9 and 10.

In these examples RuO₂ was substituted for MoO₃ in the examples 7 and 8. The reversible capacities were found to be 1180 mAh/g and 1200 mAh/g respectively as indicated in Fig.11. In the example 10 the Ru02 was mixed with PVD in the ratio 10:1 1 by weight (all ratios quoted herein are by weight). The RuO₂ /Li cell was discharged and charged between 0 to 4.3 V under a current density of 0.2mA/cm². At the first cycle the Coulombic efficiency is very high at 98%. When the cell is cycled between 0.8 V and 4.3 V it shows 780mAh/g capacity and 99% Coulombic efficiency.

### Example 11

In this example the cathode comprised a LiX-M amorphous nano-composite where:
Li is lithium,
X is fluorine and
M is the transition metal Ti. The transition metal in initially metallic form, in the form of metal clusters and the LiF, Ti, CB (ratio LiF : Ti : CB: PVDF = 3 : 1 : 0.5: 0.5) are dispersed at a nanometer scale with an average particle size of 1-10 nm for LiF and Ti, 10-40 nm for CB and 1 to 10µm for GP to provide a highly reversible lithium storage behaviour.
The mixture was applied as a paste to a Ti foil. The anode was lithium and the same electrolyte was used as in all examples. The reversible capacity obtained was 150 mAh/g in a voltage range of 0-1.2 V.

### Example 12

Here example 11 was repeated but without using CB or GP (LiF: Ti: PVDF= 3:1:0.5). LiF and Ti are dispersed at nanoscale. The reversible capacity was 70 mAh/g in a range of 0-1.2 V. Rate performance is shown in Fig.9. It can be seen the rate performance is quite good even without conductive additive.

### Example 13

In this example the cathode comprised a LiX-M amorphous nano-composite where:
Li is lithium,
X is oxygen and
M is the transition metal Ru. The transition metal is initially in metallic form, in the form of metal clusters and the Li₂O and Ru (ratio Li₂O : Ru: PVDF = 3 : 1 : 0.5) are dispersed at a nanometer scale with an average particle size of 1-10 nm for Li₂O and Ru to provide a highly reversible lithium storage behaviour. The mixture was applied as a paste to a Ti foil. The anode was lithium and the same electrolyte was used as in all examples. The reversible capacity obtained was 180 mAh/g in a voltage range of 0-1.2 V. It also shows good rate performance.

### Example 14

In this example the cathode comprised a LiX-M amorphous nano-composite where:
Li is lithium,
X is oxygen and
M is the transition metal Mo. The transition metal is initially in metallic form, in the form of metal clusters and the Li₂O and Mo (ratio Li₂O: Mo: PVDF = 3 : 1 : 0.5) are dispersed at a nanometer scale with an average particle size of 1-10 nm for Li₂O and Mo to provide a highly reversible lithium storage behaviour. The mixture was applied as a paste to a Ti foil. The anode was lithium and the same electrolyte was used as in all examples. The reversible capacity obtained was 160 mAh/g in a voltage range of 0-1.2 V.

Further tests have been carried out using other electrolytes of the various kinds described in the introduction to this application and these tests show that electrode materials described here work well with all these different electrolytes. Furthermore, additional tests have been carried out using different transition metals and different conductive additives in the forms specified in claims 1 and 4 which confirm that the invention works with all the transition metals and conductive additives. Also different halides of the transition metals have been shown to be effective. Moreover, tests carried out substituting ruthenium oxide for molybdenum oxide in Example 9-10 show that this also leads to a very high reversible capacity.

Further background information can be found from the following documents:
1. P. Poizot, S. Laruelle, S. Grugeon, L. Dupont, J. M. Tarascon, Nature, 407, 496(2000)
2. S. Laruelle, S. Grugeon, P. Poizot, M. Dolle, L. Dupont, J-M. Tarascon, J. Electrochem. Soc., 149, A627 (2002)
3. H. Li, L. H. Shi, W. Lu, X. J. Huang, L. Q. Chen, J. Electrochem. Soc. 148, A915 (2001).
4. H. Li, Y. Mo, N. Pei, X. Xu, X. J. Huang and L. Q. Chen in J. Phys. Chem. B, 104, 8477(2000)
5. H. Li, L. H. Shi, W. Lu, X. J. Huang, L. Q. Chen, J. Electrochem. Soc 148, A915 (2001)
6. H. Arai, S.Okada, Y. Sakurai, J. Yamaki, J. Power Sources, 69, 716 (1997)
7. H. Li, L. H. Shi, X. J. Huang, L. Q. Chen in PCT/CN01/00918

## Claims

1. A negative electrode for a Li-based electrochemical energy storage device, the electrode comprising at least one of molybdenum trioxide and ruthenium oxide with a binder.

2. An electrode in accordance with claim 1 wherein said binder is at least one of PVDF, PTFE, PAN and ETDM.

3. An electrode in accordance with claim 1 wherein at least one conductive additive is present in said electrode, for example a conductive additive selected from carbon black, graphite, metal powder and metal fibres.

4. A negative electrode for a Li-based electrochemical energy storage device, the electrode comprising an LiX-M amorphous composite or nano-composite where:
Li is lithium,
X is oxygen and
M is at least one of ruthenium and molybdenum in initially metallic form, in the form of metal clusters and the metal clusters and the LiX being dispersed at an atomic scale or at a nanometer scale to provide a highly reversible lithium storage behaviour.

5. A Li-based electrochemical storage device comprising positive and negative electrodes and an electrolyte disposed between them, the electrolyte including a lithium salt, an organic, non-aqueous, anhydrous solvent or a polymer and the negative electrode comprising an LiX-M amorphous composite or nano-composite where:
Li is lithium,
X is oxygen and
M is ruthenium or molybdenum, for example in initially metallic form.

6. A Li-based electrochemical storage device in accordance with claim 4 or 5 wherein it is realised as one of a rechargeable battery and a supercapacitor.

7. A Li-based electrochemical storage device in accordance with claim 5 in which said positive electrode is LiCoO₂.
